# EUROPEAN PATENT SPECIFICATION

(11) **EP 1 518 363 B1**
(45) Date of publication and mention of the grant of the patent: **24.05.2006**
(21) Application number: 03741023.0
(22) Date of filing: 25.06.2003
(51) Int. Cl.: H04L 12/28

(54) **COMMUNICATIONS SYSTEM AND METHOD**
KOMMUNIKATIONSSYSTEM UND -VERFAHREN
SYSTEME ET PROCEDE DE COMMUNICATION

(30) Priority: 28.06.2002 GB 0215015
(43) Date of publication of application: 30.03.2005
(73) Proprietor: Nokia Corporation, 02150 Espoo (FI)
(72) Inventor: HIPPELAINEN, Lassi, FIN-00250 Helsinki (FI)
(74) Representative: Style, Kelda Camilla Karen
(86) International application number: PCT/IB2003/003199
(87) International publication number: WO 2004/004231

(56) References cited:
- WO-A-02/42861
- HANSEN HARRI: "IPsec and Mobile-IP in Mobile Ad Hoc Networking" -, 25 April 2000 (2000-04-25), XP002196707 Retrieved from the Internet: <URL:http://www.hut.fi/~hansen/papers/adho c/index.html> [retrieved on 2002-04-19]
- CHENG Y ET AL: "TOKEN BASED AUTHENTICATION FOR HANDOVER SECURITY" SECURE INFORMATION NETWORKS. COMMUNICATIONS AND MULTIMEDIA SECURITY, XX, XX, 1999, pages 231-243, XP001000497

## Description

### Field of the invention

The present invention relates to a communications system and in particular but not exclusively to a network having two nodes in communication, at least one of which is mobile and has an address which can change during a single session.

### Background to the Invention

Wireless telecommunication networks are known. In these known systems, the area covered by the telecommunications network is divided up into cells. Each cell is provided with a base station. The base station is arranged to be in wireless communication with user equipment such as mobile telephones.

The strong growth in the number of internet users and services provided through the Internet has been one of the most remarkable phenomena in communications in recent years. Another current trend is the increasing use of various mobile terminals such as lap tops, PDA equipment (personal digital assistants) such as palm tops and the like and intelligent telephones.

The wireless communication network and internet network technology are gradually converging to make the packet switched data services used in the internet available to mobile users. Initially, the technology developed for the internet has primarily been designed for desk top computers and medium to high band width data connections. In contrast, the mobile terminal environments are generally characterised by less band width and smaller connection stability in comparison to the fixed networks. Additionally, terminals have tended to have smaller displays, less memory and less powerful processors as compared to desk top computers or the like.

However, IP (internet protocol) base packet services which are usable in a wireless mobile environment are being developed at an increasing rate. This is partly due to demand by users of mobile terminals and partly due to the development of new technologies which are attempting to increase the available band width, improve quality of service and data security. The new standards which are being developed include GPRS (general packet radio service), UMTS (universal mobile telecommunications system) and WLAN (Wireless Local Area Network). These are by way of example only. The GPRS standard aims to provide high quality services for GSM subscribers by efficiently using the GSM infrastructure and protocols. In addition, the GPRS radio services is designed to provide packet based services. WLAN standards (e.g. IEEE 802.11 and HiperLAN) define a Ethernet-like network that uses radio waves instead of cables.

One issue which needs to be addressed in communication networks relates to security and mobility. Mobility, for example when a mobile station moves from one cell to the next or from one network to another, or even from one service provider to another, requires the address of the mobile station to change. On the other hand, security requires the address of the mobile station to be identified reliably.

Reference is made to the IETF (internet engineering task force) standard RFC2401 which sets out the security architecture for the internet protocol. This standard is hereby incorporated by reference. In this standard, various security services for traffic at the IP (internet protocol) layer both in IPv4 and IPv6 environments is set out. IPSec or IP security defined in this IETF standard is designed to provide interoperable, high quality, cryptographically based security for IPv4 and IPv6. The set of security services offered include access control, connectionless integrity, data origin authentication, protection against replays, confidentiality (ie encryption) and limited traffic flow confidentiality. These services are provided at the IP layer.

IPSec uses two traffic security protocols, the authentication header and the encapsulating security payload protocols. In the IPSec standard, the identity of the mobile station is bound to its IP address, which cannot change during a session. Accordingly, there is a conflict between the requirement to change the address of the mobile station if it is moved and the requirement for IPSec where the address should not change during a session.

The mobile version, that is for wireless communications, of IPv4 was designed to be independent of IPSec. Additionally, the version of IPv6 for wireless telecommunications was also designed to use a different security mechanism. These solutions effectively provide the security layer above the mobility layer. Accordingly, the IPSec layer does not see the mobility because it is run on top of the mobile IP layer. The mobile IP layer only shows the stable home addresses to the upper IPSec layer. However, this has the disadvantage that the mobile IP layer is left without IPSec protection. Accordingly, the mobile IP layer needs to be provided with its own security functions. At each handover, the signals need to be authenticated. This means that a first security association needs to be provided to authenticate the security layer and a second security association, which is independent of the security layer needs to be provided for the mobility layer. As far as the mobility security is concerned, previous solutions require that a method be provided to authenticate the user and the session start to set up the security association for the mobility layer. This authentication often requires a home agent as a trusted third party.

The inventor has appreciated that the current proposals suffer from a number of disadvantages. Firstly, having different requirements for a wireless network as compared to a IP network is undesirable from the point of view of convergence. Secondly, by requiring separate security associations for both the security and the mobility layer means that unnecessary complexity and unnecessary additional components may be required.

International Patent Publication No. WO 02/42861 A2 discloses a system and method for maintaining a secure connection between a home network and a mobile client when the client roams outside the home network. A new IP address is registered as a "care-of-address". The existing IP address Is used to forward packets to the mobile client at this "care-of-address" via a relay server.

### Summary of the Invention

It is therefore an aim of embodiments of the present invention to address one or more of these problems.

According to a first aspect of the present invention there is provided a communications system comprising a first node, said first node arranged to have a plurality of addresses during a session; a second node connectable to said first node, a secure connection being establishable between said first node and said second node and a security association is defined between said first and second nodes; wherein said first node being arranged to send information to said second node when the address of said first node changes during a session, said information comprising new address Information and Information relating to the identity of the first node, characterised by the existing security association being used to authenticate a packet with the new address Information when the address of said first node changes.

According to a second aspect of the present invention there is provided a method for use in a communications system comprising a first node, said first node arranged to have a plurality of addresses during a session and a second node, said method comprising connecting said first node to said second node via a secure connection and defining a security association between said first and second nodes; sending information from said first node to said second node when the address of said first node changes during a session, said information comprising new address information and information relating to the identity of the first node, characterised by using the existing security association to authenticate a packet with the new address information when the address of said first node changes.

According to a third aspect of the present invention there is provided a first node for use in a communications system, said first node arranged to have a plurality of addresses during a session, said first node comprising means for establishing a secure connection between the first node a second node to which said first node is connectable and for defining a security association between said first and second nodes; and means for sending information to said second node when the address of said first node changes during a session, said information comprising new address information and information relating to the identity of the first node, characterised by the existing security association being used to authenticate a packet with the new address information when the address of said first node changes.

According to a fourth aspect of the present invention there is provided a second node for use In a communications system comprising means for securely connecting said second node to a first node which is arranged to have a plurality of addresses during a session and for defining a security association between said first and second nodes; and means for receiving from said first node information when the address of said first node changes during a session, said information comprising new address information and information relating to the identity of the first node characterised by the existing security association being used to authenticate a packet with the new address information when the address of said first node changes.

### Brief Description of the Drawings

For a better understanding of the present invention and as to how the same may be carried into effect, reference will now be made by way of example to the accompanying drawings in which:
Figure 1 is a schematic view of an embodiment of the invention;
Figure 2 shows an example of a network with which embodiments of the present invention can be used; and
Figure 3 shows a flow chart of a method embodying the present invention.

### Detailed Description of Embodiments of the Present Invention

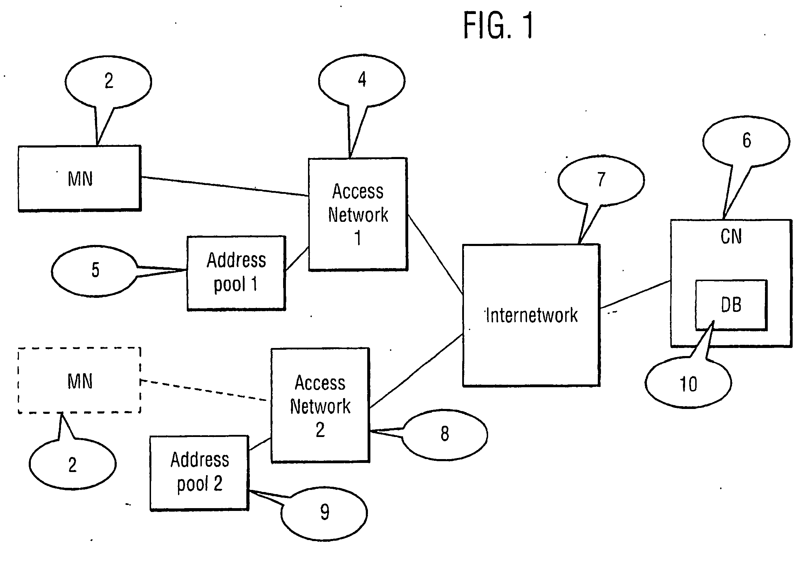

Reference is made to Figure 1 which shows schematically a system incorporating embodiments of the present invention. A first mobile node 2 is connected to a first access network 4. This mobile node 2 can take any suitable format. For example, the node can be user equipment. The term user equipment includes mobile telephones, mobile stations, portable digital assistants (PDAs), lap top computers or any other type of user equipment. The mobile node 2 can also be a node such as a base transceiver station, or higher node. It will be explained in more detail hereinafter as to how such a "fixed" node can in practice be regarded as being a "mobile" node.

The connection between the mobile node 2 and the access network 4 may therefore be via a wired or a wireless connection. In some embodiments, even where the mobile node 2 is user equipment, the connection may, in some circumstances, be via a wired connection.

Using the access network 4 and an internetwork 7, the mobile node 2 is able to communicate with a correspondent node (CN). The correspondent node 6 can take any suitable form and may for example be a server , a host or a gateway. The internetwork 7 is connectable for example to a number of different access networks 4. The mobile node 2 is allocated a IP address from the address pool 5 of the access network 4 The address can be provided from the address pool 5 to the mobile node 2 using any suitable mechanism. In IPv4, the most common methods are Dynamic Host Configuration Protocol (RFC2131) and Point-to-Point Protocol (RFC1661). In IPv6 it is possible to use Stateless Address Autoconfiguration (RFC2462).

The IP address is allocated when the mobile node 2 first attaches itself to the access network 4. As will be discussed in more detail hereinafter, the IP address may change during the duration of the connection of the mobile node to the correspondent node, that is during a single session. Additionally, a security association is also set up. This security association is, for example, as defined in the IETF specification RFC2401 which is herein incorporated by reference.

The security association is a connection which affords security services to traffic carried by it. Security services are afforded to a security association by the use of, for example, an authentication header protocol or by the use of an encapsulating security payload protocol. Usually, a security association is unidirectional and to have secure bidirectional communication between two entities requires two security associations. The security association can take any suitable form and may for example be of a transport mode or a tunnel mode. A tunnel mode security association is a security association applied to an IP tunnel, that is between two gateways or the like. The tunnel mode may also be used by a host. A transport mode is a security association between two hosts. A host is an endpoint such as a server.

It should be appreciated that according to the IETF specification referred to, the security services offered by the security association depend on the security protocol selected, security association mode, the end points of the security association and the options which are selected within the protocol. The correspondent node will store information which identifies the IP address and the security association. In particular, the security parameters index (SPI) is stored in the correspondent node in a database 10 or any other suitable memory along with the IP address of the mobile node. The combination of a destination address, a security protocol and an SPI uniquely identifies a security association. The SPI is carried in the authentication header and the encapsulating security payload protocols to enable the receiving system to select the security association under which a received packet will be processed.

It should be appreciated that the mobile node 2 will also have information identifying its IP address and the SPI.

The mobile node 2 is, as mentioned above, potentially movable. This movement can occur as a result of the mobile node 2 physically moving. Where the mobile node is a user, the user may transport the mobile node to a different location. A node may also be, for example, changed from one network to another if there is traffic congestion on one network but not the other. The node in this case would not physically be mobile.

In the example shown in Figure 1, the mobile node 2 connects to a second access network 8. The mobile node 2 needs to change its IP address and accordingly, a new IP address is associated with the mobile node from a different address pool 9. Different access networks may have different address pools. In embodiments of the present invention, the same SPI is associated with the mobile node 2. However, the correspondent node 6 has stored the first IP address with the SPI in the database 10. Accordingly; without embodiments of the present invention, the correspondent node would not recognise the mobile node 2 as it would not have the required IP address. Accordingly, the mobile node 2 sends the new IP address to the correspondent node along with an indication or hint that it is effectively a continuation of the connection with the node which previously had the first IP address. Preferably, the first IP address is included in the message. This message including the new address and the old address is sent to the correspondent node. The existing security association between the two nodes is used to authenticate the handover. The IP address stored with the appropriate security association in the correspondent node is updated in the database.

In more detail, when the mobile node uses a new address the mobile node needs to provide some information to the correspondent node to identify that it is effectively the same node. This information or hint has to be sent unencrypted as there is no security association to decrypt it. In preferred embodiments of the present invention, to avoid extra signals, the hint is included with another packet, for example, as a header option. It is of course possible in alternative embodiments of the present invention to send the message separately. The packet which is received at the correspondent node carries the SPI of the old security association. However, it should be appreciated that there may be several security associations with the same value. The hint thus comprises any information which helps to resolve which is the correct security association. One easy option is to use the previous IP address which is already bound to the correct security association. For embodiments of the present invention using IPv6, the home address option of the mobile could be used as the carrier of the hint.

When the correspondent node receives the hint, it checks that the indicated security association authenticates the packet. If the test is passed, ie the packet is authenticated, the correspondent node updates the IP address of the entire security association bundle of the mobile node. It should be appreciated that there may be more than one security association between the mobile node and the correspondent node and all of these security associations are updated. If the authentication fails, the packet is dropped.

The purpose of this check is to prevent a fake address update. The actual IP security protocol protects against other damages.

In some embodiments of the present invention, the packet can be passed if the security association bound to the new address authenticates it. That is, the hint is ignored. Several hints can be sent after the movement to increase robustness. These hints may be the same or different.

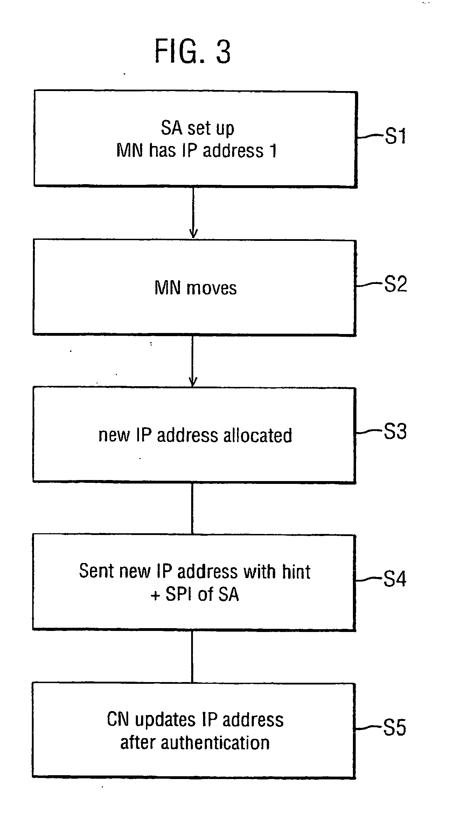

Reference is made to Figure 3 which shows a flow diagram embodying the present invention.

The security association is set up between the mobile node 2 and the correspondent node 6. The mobile node has the first IP address, IP address 1. This takes place in step S1.

In step S2 the mobile node moves.

In step S3, a new IP address is allocated.

In step S4, the new IP address is sent as a hint and the SPI of the security association from the mobile node to the correspondent node is sent.

In step S5, the correspondent node updates the address after authentication

Embodiments of the present invention are implemented as part of the IP and IPSec stack. If the operating system allows applications to cache an IP address at startup, the stack will need a translator that uses the fresh address on the wire, no matter what was the old address used by the application An application may have stored the address of the host into some data structure that is not visible to the IP stack. When the address changes, the application will not know what happened, and keeps on using the old (and invalid) address. Therefore the IP stack must keep a trail of previous addresses, and when an old one is seen, it swaps the current one ("fresh address on the wire") in its place. This will be a common incident, because the socket interface stores addresses in upper protocol layers.

Embodiments of the present invention allow fast and scalable mobility with secure sessions. Additionally, the procedure is simplified and the need for an additional entity such as for example a home agent is avoided. This reduces the equipment overhead and also increases the speed.

Embodiments of the present invention have the advantage that they are simpler and faster than the mobile IP solution presented previously. Additionally, this does not have any security problem and needs no identification infrastructure other than what is already needed for IPSec. Handovers can be fast because no new messages will be needed in those embodiments where the hint is piggybacked to another packet as a header option. Additionally, the path from mobile node to correspondent node is always straight, that is it does not pass through a third node such as for example the Mobile IP home agent.

In embodiments of the present invention, the privacy extensions of IPv6 addressing can be used as well as the mobility of services. The privacy extensions are defined in RFC3041. The address of the mobile (or even a fixed node) may change even if there is no movement. The host negotiates a new address for itself to confuse hostile nodes that try to trace the host by its address. Similarly, a service may move to another address, e.g. in the case of load balancing or failure.

The CN 6 may effectively be regarded as being a mobile service if the server is changed due to load balancing or high availability. In this case there would be a cluster of servers rather than just one. The servers would be connected in parallel and share the load. Each server has its own IP address, so moving the load to another server changes the IP address of the service.

(Embodiments of the present invention are applicable where the nodes have a secure session between them.)

Embodiments of the present invention are applicable where the nodes ie the mobile node and the correspondent node have a secure session between them. In some embodiments of the present invention, the correspondent node may also be mobile. Embodiments of the present invention have described one of the nodes as being a content server. This other node can take any other suitable form and can be for example a mobile device. Where the service is for example a voice call, both nodes may be personal mobiles or mobile devices..

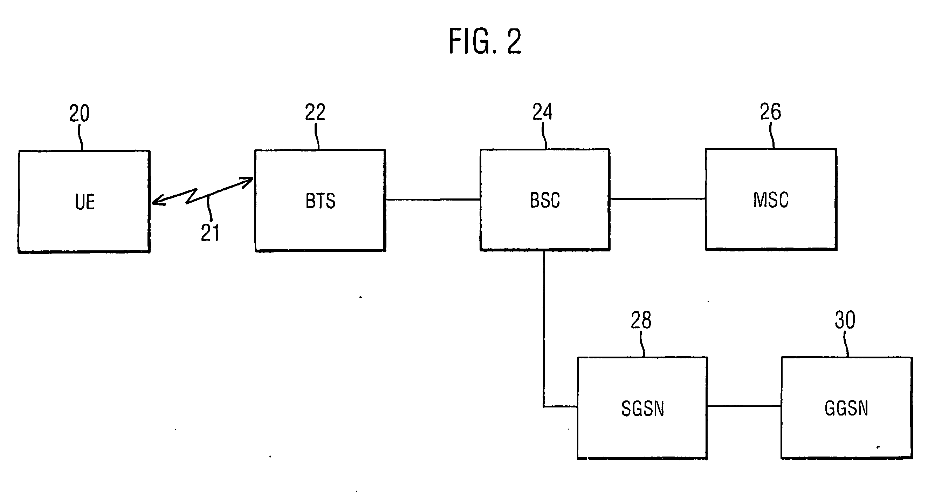

Reference is now made to Figure 2 which shows typical elements of a wireless telecommunications network. User equipment 20 is arranged to have a wireless connection 21 with a WLAN base transceiver station 22. The base transceiver 22 may be controlled by a base station controller 24. Typically one base station controller 24 will control a number of base stations. It should be appreciated that different standards may use different terminologies for similar entities. For example, the base station controller may be referred to as a radio network controller in the proposed third generation standard. In some proposals, the functionality of the base station controller and the base transceiver station may be provided by a single entity. The base station controller 26 may also be connected to an SGSN 28 which in turn is connected to a GGSN 30. The GGSN is the gateway GPRS support node 30 and allows connection to for example the correspondent node.

As far as the embodiment shown in Figure 1 is concerned, the user equipment 20 may be a mobile node as may be the base transceiver station. In preferred embodiments, the mobile node will be the user equipment for the base transceiver station. However, it is conceivable in alternative embodiments of the present invention that other nodes of the mobile telecommunications network, whether illustrated in Figure 2 or not may be provided. The base transceiver, base station controller and SGSN may provide part of one of the networks shown in Figure 1.

## Claims

1. A communications system comprising:
a first node (2), said first node arranged to have a plurality of addresses during a session;
a second node (4, 8) connectable to said first node, a secure connection being establishable between said first node and said second node and a security association is defined between said first and second nodes; wherein:
said first node being arranged to send information to said second node when the address of said first node changes during a session, said information comprising new address information and information relating to the identity of the first node, **characterised by** the existing security association being used to authenticate a packet with the new address information when the address of said first node changes.

2. A system as claimed in claim 1, wherein said addresses comprise IP addresses.

3. A system as claimed in claim 1 or 2, wherein said first node information and/or new address information is in a packet.

4. A system as claimed in claim 1, 2 or 3, wherein said new address information comprises the new address of said first node.

5. A system as claimed in any preceding claim, wherein said information relating to the first node comprises a previous address of said first node.

6. A system as claimed in any preceding claim, wherein said secure connection comprises an IPSec connection.

7. A system as claimed in claim 6, wherein when the address changes the existing security association is used to authenticate the change of address.

8. A system as claimed in claim 7 wherein the second node stores information relating to the association between the address of the first node and the security association.

9. A system as claimed in claim 6 or any claim appended thereto, wherein said second node stores a security parameter index SPI of the security association.

10. A system as claimed in any preceding claim, wherein said information relating to the identity of the first node is included in a message sent from the first to the second node.

11. A system as claimed in claim 10, wherein said information relating to the identity of the first node is sent in a message header.

12. A system as claimed in any preceding claim, wherein said first node is a mobile node.

13. A system as claimed in any preceding claim, wherein said first node comprises user equipment.

14. A system as claimed in any preceding claim, wherein said first node is connectable to a plurality of different access networks.

15. A system as claimed in any preceding claim, wherein second node comprises a host, a server or a gateway.

16. A system as claimed in any preceding claim, wherein means are provided for allocating the plurality of addresses of said first node.

17. A system as claimed in any preceding claim, wherein said system comprises a wireless local area network.

18. A method for use in a communications system comprising a first node (2), said first node arranged to have a plurality of addresses during a session and a second node (4, 8), said method comprising:
connecting said first node to said second node via a secure connection and defining a security association between said first and second nodes;
sending information from said first node to said second node when the address of said first node changes during a session, said information comprising new address information and information relating to the identity of the first node, **characterised by** using the existing security association to authenticate a packet with the new address information when the address of said first node changes.

19. A method as claimed in claim 18, comprising the step of defining a security association between the first and second nodes.

20. A method as claimed in claim 19, comprising the step of storing at the second node information relating to an association between the address of the first node and the security association.

21. A method as claimed in any of claims 19 and 20, comprising the step of the second node storing a security parameter index SPI of the security association.

22. A method as claimed in any of claims 18 to 21, comprising the set of sending said information relating to the identity of the first node in a message sent from the first to the second node.

23. A first node (2) for use in a communications system, said first node arranged to have a plurality of addresses during a session, said first node comprising:
means for establishing a secure connection between the first node a second node (4, 8) to which said first node is connectable and for defining a security association between said first and second nodes; and
means for sending information to said second node when the address of said first node changes during a session, said information comprising new address information and information relating to the identity of the first node, **characterised by** the existing security association being used to authenticate a packet with the new address information when the address of said first node changes.

24. A second node (4, 8) for use in a communications system comprising:
means for securely connecting said second node to a first node (2) which is arranged to have a plurality of addresses during a session and for defining a security association between said first and second nodes; and
means for receiving from said first node information when the address of said first node changes during a session, said information comprising new address information and information relating to the identity of the first node **characterised by** the existing security association being used to authenticate a packet with the new address information when the address of said first node changes.

## Patentansprüche

1. Kommunikationssystem, umfassend:
einen ersten Knoten (2), wobei der erste Knoten eingerichtet ist, während einer Sitzung eine Vielzahl von Adressen aufzuweisen;
einen zweiten Knoten (4, 8), der mit dem ersten Knoten verbindbar ist, wobei eine sichere Verbindung zwischen dem ersten Knoten und dem zweiten Knoten aufgebaut werden kann und eine Sicherheitsverknüpfung zwischen dem ersten und dem zweiten Knoten festgelegt ist; wobei
der erste Knoten eingerichtet ist, Informationen an den zweiten Knoten zu senden, wenn die Adresse des ersten Knotens sich während einer Sitzung ändert, wobei die Informationen neue Adressinformationen und Informationen umfassen, die sich auf die Identität des ersten Knotens beziehen, **dadurch gekennzeichnet, dass** die vorhandene Sicherheitsverknüpfung verwendet wird, um ein Paket mit den neuen Adressinformationen zu authentifizieren, wenn sich die Adresse des ersten Knotens ändert.

2. System nach Anspruch 1, wobei die Adressen IP-Adressen umfassen.

3. System nach Anspruch 1 oder 2, wobei die Informationen über den ersten Knoten und/oder die neuen Adressinformationen sich in einem Paket befinden.

4. System nach Anspruch 1, 2 oder 3, wobei die neuen Adressinformationen die neue Adresse des ersten Knotens umfassen.

5. System nach irgendeinem der vorhergehenden Ansprüche, wobei die Informationen, die sich auf den ersten Knoten beziehen, eine vorherige Adresse des ersten Knotens unnfassen.

6. System nach irgendeinem der vorhergehenden Ansprüche, wobei die sichere Verbindung eine IPSec-Verbindung umfasst.

7. System nach Anspruch 6, wobei, wenn sich die Adresse ändert, die vorhandene Sicherheitsverknüpfung verwendet wird, um die Adressänderung zu authentifizieren.

8. System nach Anspruch 7, wobei der zweite Knoten Informationen speichert, die sich auf die Verknüpfung zwischen der Adresse des ersten Knotens und der Sicherheitsverknüpfung beziehen.

9. System nach Anspruch 6 oder irgendeinem davon abhängigen Anspruch, wobei der zweite Knoten einen Sicherheitsparameterindex SPI der Sicherheitsverknüpfung speichert.

10. System nach irgendeinem der vorhergehenden Ansprüche, wobei die Informationen, die sich auf die Identität des ersten Knotens beziehen, in einer Nachricht eingeschlossen sind, die von dem ersten an den zweiten Knoten gesendet wird,

11. System nach Anspruch 10, wobei die Informationen, die sich auf die Identität des ersten Knotens beziehen, in einem Nachrichten-Anfangsblock gesendet werden,

12. System nach irgendeinem der vorhergehenden Ansprüche, wobei der erste Knoten ein Mobilknoten ist.

13. System nach irgendeinem der vorhergehenden Ansprüche, wobei der erste Knoten Benutzerausrüstung umfasst.

14. System nach irgendeinem der vorhergehenden Ansprüche, wobei der erste Knoten mit einer Vielzahl verschiedener Zugangsnetze verbindbarist.

15. System nach irgendeinem der vorhergehenden Ansprüche, wobei der zweite Knoten einen Host, einen Server oder ein Gateway umfasst.

16. System nach irgendeinem der vorhergehenden Ansprüche, wobei Mittel bereitgestellt sind, um die Vielzahl von Adressen des ersten Knotens zuzuweisen.

17. System nach irgendeinem der vorhergehenden Ansprüche, wobei das System ein drahtloses lokales Netz umfasst,

18. Verfahren zur Verwendung in einem Kommunikationssystem, welches einen ersten Knoten (2) umfasst, wobei der erste Knoten eingerichtet ist, während einer Sitzung eine Vielzahl von Adressen aufzuweisen, und einen zweiten Knoten (4, 8), wobei das Verfahren umfasst:
Verbinden des ersten Knotens mit dem zweiten Knoten über eine sichere Verbindung und Festlegen einer Sicherheitsverknüpfung zwischen dem ersten und dem zweiten Knoten;
Senden von Informationen von dem ersten Knoten an den zweiten Knoten, wenn die Adresse des ersten Knotens sich während einer Sitzung ändert, wobei die Informationen neue Adressinformationen und Informationen umfassen, die sich auf die Identität des ersten Knotens beziehen, **dadurch gekennzeichnet, dass** die vorhandene Sicherheitsverknüpfung verwendet wird, um ein Paket mit den neuen Adressinformationen zu authentifizieren, wenn sich die Adresse des ersten Knotens ändert.

19. Verfahren nach Anspruch 18, weiter umfassend den Schritt, eine Sicherheitsverknüpfung zwischen dem ersten und dem zweiten Knoten festzulegen.

20. Verfahren nach Anspruch 19, umfassend den Schritt, an dem zweiten Knoten Informationen zu speichern, die sich auf eine Verknüpfung zwischen der Adresse des ersten Knotens und der Sicherheitsverknüpfung beziehen.

21. Verfahren nach einem der Ansprüche 19 oder 20, umfassend den Schritt, dass der zweite Knoten einen Sicherheitsparameterindex SPI der Sicherheitsverknüpfung speichert.

22. Verfahren nach einem der Ansprüche 18 bis 21, umfassend den Schritt, die Informationen, die sich auf die Identität des ersten Knotens beziehen, in einer Nachricht zu senden, die von dem ersten Knoten an den zweiten Knoten gesendet wird.

23. Erster Knoten (2) zur Verwendung in einem Kommunikationssystem, wobei der erste Knoten eingerichtet ist, während einer Sitzung eine Vielzahl von Adressen aufzuweisen, wobei der erste Knoten umfasst:
Mittel zum Aufbauen einer sicheren Verbindung zwischen dem ersten Knoten und einem zweiten Knoten (4, 8), mit dem der erste Knoten verbindbar ist, und zum Festlegen einer Sicherheitsverknüpfung zwischen dem ersten und dem zweiten Knoten; und
Mittel zum Senden von Informationen an den zweiten Knoten, wenn die Adresse des ersten Knotens sich während einer Sitzung ändert, wobei die Informationen neue Adressinformationen und Informationen umfassen, die sich auf die Identität des ersten Knotens beziehen, **dadurch gekennzeichnet, dass** die vorhandene Sicherheitsverknüpfung verwendet wird, um ein Paket mit den neuen Adressinformationen zu authentifizieren, wenn sich die Adresse des ersten Knotens ändert.

24. Zweiter Knoten (4, 8) zur Verwendung in einem Kommunikationssystem, umfassend:
Mittel, um den zweiten Knoten sicher mit einem ersten Knoten (2) zu verbinden, welcher eingerichtet ist, während einer Sitzung eine Vielzahl von Adressen aufzuweisen, und zum Festlegen einer Sicherheitsverknüpfung zwischen dem ersten und dem zweiten Knoten; und
Mittel, um von dem ersten Knoten Informationen zu empfangen, wenn die Adresse des ersten Knotens sich während einer Sitzung ändert, wobei die Informationen neue Adressinformationen und Informationen umfassen, die sich auf die Identität des ersten Knotens beziehen, **dadurch gekennzeichnet, dass** die vorhandene Sicherheitsverknüpfung verwendet wird, um ein Paket mit den neuen Adressinformationen zu authentifizieren, wenn sich die Adresse des ersten Knotens ändert.

## Revendications

1. Système de communications comprenant :
un premier noeud (2), ledit premier noeud étant adapté pour avoir une pluralité d'adresses pendant une session ;
un second noeud (4, 8) pouvant être connecté audit premier noeud, une connexion sécurisée étant établissable entre ledit premier noeud et ledit second noeud et une association de sécurité est définie entre lesdits premier et second noeuds ; où ;
ledit premier noeud est adapté pour envoyer des informations audit second noeud lorsque l'adresse dudit premier noeud change pendant une session, lesdites informations comprenant des informations de nouvelle adresse et des informations liées à l'identité du premier noeud, **caractérisé en ce que** l'association de sécurité existante est utilisée pour authentifier un paquet de données avec les informations de nouvelle adresse lorsque l'adresse dudit premier noeud change.

2. Système selon la revendication 1, dans lequel lesdites adresses comprennent des adresses IP.

3. Système selon la revendication 1 ou 2, dans lequel lesdites informations du premier noeud et/ou informations de nouvelle adresse sont dans un paquet de données.

4. Système selon les revendications 1, 2 ou 3, dans lequel lesdites informations de nouvelle adresse comprennent la nouvelle adresse dudit premier noeud.

5. Système selon l'une quelconque des revendications précédentes, dans lequel lesdites informations relatives au premier noeud comprennent une adresse précédente dudit premier noeud.

6. Système selon l'une quelconque des revendications précédentes, dans lequel ladite connexion sécurisée comprend une connexion d'IP sécurisée.

7. Système selon la revendication 6, dans lequel lorsque l'adresse change, l'association de sécurité existante est utilisée pour authentifier le changement d'adresse.

8. Système selon la revendication 7, dans lequel le second noeud stocke des informations relatives à l'association entre l'adresse du premier noeud et l'association de sécurité.

9. Système selon la revendication 6, ou toute revendication annexée à celle-ci, dans lequel ledit deuxième noeud stocke un indice de paramètre de sécurité (SPI) de l'association de sécurité.

10. Système selon l'une quelconque des revendications précédentes, dans lequel lesdites informations liées à l'identité du premier noeud sont incluses dans un message envoyé du premier au second noeud.

11. Système selon la revendication 10, dans lequel lesdites informations relatives à l'identité du premier noeud sont envoyées dans un en-tête de message.

12. Système selon l'une quelconque des revendications précédentes, dans lequel ledit premier noeud est un noeud mobile.

13. Système selon l'une quelconque des précédentes revendications, dans lequel ledit premier noeud comprend un équipement d'utilisateur.

14. Système selon l'une quelconque des précédentes revendications, dans lequel ledit premier noeud est connectable à une pluralité de différents réseaux d'accès.

15. Système selon l'une quelconque des précédentes revendications, dans lequel le second noeud comprend un hôte, un serveur ou une passerelle.

16. Système selon l'une quelconque des précédentes revendications, dans lequel des moyens sont fournis pour attribuer la pluralité d'adresses dudit premier noeud.

17. Système selon l'une quelconque des précédentes revendications, dans lequel ledit système comprend un réseau maître local sans fil.

18. Procédé pour une utilisation dans un système de communications comprenant un premier noeud (2), ledit premier noeud étant adapté pour avoir une pluralité d'adresses pendant une session et un second noeud (4, 8), ledit procédé comprenant les étapes consistant à :
connecter ledit premier noeud audit second noeud via une connexion sécurisée et définir une association de sécurité entre lesdits premier et second noeuds ;
envoyer des informations dudit premier noeud audit second noeud lorsque l'adresse dudit premier noeud change pendant une session, lesdites informations comprenant des informations de nouvelle adresse et des informations liées à l'identité du premier noeud, **caractérisé par** l'utilisation de l'association de sécurité existante pour authentifier un paquet de données avec les informations de nouvelle adresse lorsque l'adresse dudit premier noeud change.

19. Procédé selon la revendication 18, comprenant l'étape consistant à définir une association de sécurité entre les premier et second noeuds.

20. Procédé selon la revendication 19, comprenant l'étape consistant à stocker, au niveau du second noeud, des informations relatives à une association entre l'adresse du premier noeud et l'association de sécurité.

21. Procédé selon la revendication l'une quelconque des revendications 19 et 20, comprenant l'étape consistant à stocker, par le second noeud, un indice de paramètre de sécurité (SPI) de l'association de sécurité.

22. Procédé selon l'une quelconque des revendications 18 à 21, comprenant l'étape consistant à envoyer lesdites informations relatives à l'identité du premier noeud dans un message envoyé du premier au second noeud.

23. Premier noeud (2) pour une utilisation dans un système de communications, ledit premier noeud étant adapté pour avoir une pluralité d'adresses durant une session, ledit premier noeud comprenant :
des moyens pour établir une connexion sécurisée entre le premier noeud et un second noeud (4, 8) auquel ledit premier noeud est connectable et pour définir une association de sécurité entre lesdits premier et second noeuds ; et
des moyens pour envoyer des informations audit second noeud lorsque l'adresse dudit premier noeud change pendant une session, lesdites informations comprenant des informations de nouvelle adresse et des informations relatives à l'identité du premier noeud, **caractérisé en ce que** l'association de sécurité existante est utilisée pour authentifier un paquet de données avec les informations de nouvelle adresse lorsque l'adresse dudit premier noeud change.

24. Second noeud (4, 8) pour une utilisation dans un système de communications comprenant :
des moyens pour connecter de manière sécurisée ledit second noeud à un premier noeud (2) qui est adapté pour avoir une pluralité d'adresses pendant une session et pour définir une association de sécurité entre lesdits premier et second noeuds ; et
des moyens pour recevoir, à partir dudit premier noeud, des informations lorsque l'adresse dudit premier noeud change pendant une session, lesdites informations comprenant des informations de nouvelle adresse et des informations liées à l'identité du premier noeud, **caractérisé en ce que** l'association de sécurité existante est utilisée pour authentifier un paquet de données avec les informations de nouvelle adresse lorsque l'adresse dudit premier noeud change.
